# EUROPÄISCHE PATENTSCHRIFT

(11) **EP 0 874 433 B1**
(45) Veröffentlichungstag und Bekanntmachung des Hinweises auf die Patenterteilung: **19.03.2003**
(21) Anmeldenummer: 98106507.1
(22) Anmeldetag: 08.04.1998
(51) Int. Cl.: H02B 1/052, H01R 9/26, H01R 4/38

(54) **Auf Tragschienen aufschnappbares Gerät**
Rail mounted device
Dispositif encliquetable sur un rail de support

(30) Priorität: 21.04.1997 DE 29707161 U; 12.06.1997 DE 29710310 U; 12.06.1997 DE 19724945
(43) Veröffentlichungstag der Anmeldung: 28.10.1998
(73) Patentinhaber: SIEMENS AKTIENGESELLSCHAFT, 80333 München (DE)
(72) Erfinder: Böhm, Josef, Dipl.-Ing. (FH), 94365 Parkstetten (DE); Eckert, Gunther, Dipl.-Ing. (FH), 93142 Maxhütte-Haidhof (DE); Fischer, Elmar, Dipl.-Ing. (FH), 93051 Regensburg (DE); Heil, Harald, Dipl.-Ing., 96117 Memmelsdorf (DE); Leitl, Wolfgang, Dipl.-Ing. (FH), 93173 Wenzenbach (DE); Rösch, Heinrich, Dipl.-Ing. (FH), 93109 Wiesent (DE); Rösch, Walter, 93109 Wiesent (DE); Taube, Willi, Dipl.-Ing. (FH), 93087 Alteglofsheim (DE); Weber, Christoph, Dipl.-Ing. (FH), 84034 Landshut (DE)

(56) Entgegenhaltungen:
- EP-A- 0 327 708
- EP-A- 0 715 383
- EP-A- 0 769 826
- WO-A-97/31412
- DE-A- 3 314 919
- DE-A- 3 513 762
- DE-A- 3 922 551
- DE-A- 4 210 556
- DE-A- 19 504 762
- FR-A- 2 425 607
- FR-A- 2 580 860
- FR-A- 2 601 513
- FR-A- 2 612 340
- FR-A- 2 738 676
- GB-A- 1 247 790
- US-A- 2 434 604
- US-A- 4 790 778

## Beschreibung

Die Erfindung bezieht sich auf ein auf eine Tragschiene aufschnappbares Gerät, insbesondere ein Reiheneinbaugerät, gemäß dem Oberbegriff des Anspruchs 1. Ein derartiges Gerät ist z. B. aus der DE 39 22 551 A1 bekannt.

Zum Befestigen von Reiheneinbaugeräten und sonstigen Schaltund Steuergeräten auf genormten Tragschienen oder Hutschienen wird üblicherweise zumindest ein aufschnappbarer Halteschieber verwendet. Wie aus der DE 35 13 762 A1, der EP 0 715 383 A1 und aus der DE 42 10 566 A1 bekannt, stützt sich hierbei eine Feder einerseits gegen den Schieber oder seine Haltenase und andererseits gegen das Gehäuse ab. Der federbelastete Schieber ist dafür ausgebildet, den Tragschienenrand mit der Haltenase zu hintergreifen und das Gerät auf der Tragschiene zu halten. Der Schieber kann unter Eingriff eines von der Oberseite des Gerätes bedienbaren Löseelements stehen, das eine Kraftkomponente in der Arbeitsebene des Schiebers vermittelt.

Alle Bewegungen eines solchen, z.B. auch aus der DE 39 22 551 A1 bekannten Schiebers laufen hierbei gegen oder unter Federkraft ab. Dies gilt auch für einen in der nicht vorveröffentlichten WO 97/31412 A1 beschriebenen rahmenartigen Schieber, dessen an einer Seite offener Rahmen eine Feder aufnimmt, die mit einem relativ zum Rahmen bewegbaren und im Montagezustand durch rahmenseitige Anschläge gegen eine Bewegung aus dem Rahmen heraus begrenzten Riegel verbunden ist.

Bei angeschlossenen Leitungen oder Sammelschienen wird der Zugang zum Betätigungsorgan des Schiebers bei derartigen Geräten erheblich beeinträchtigt, meist verhindert. Man hat daher versucht, durch möglichst raumgebende Spezialverschienungssysteme das Lösen von installierten Reiheneinbaugeräten aus dem angereihten Verband zu ermöglichen. Derartige Sonderkonstruktionen sind jedoch aufwendig und erfordern hohe Lagerhaltung.

Der Erfindung liegt die Aufgabe zugrunde, ein auf Tragschienen aufschnappbares Gerät derart zu verbessern, dass ohne Verminderung der Haltekräfte die Betätigung des Schiebers erleichtert wird.

Diese Aufgabe wird erfindungsgemäß gelöst durch die Merkmale des Anspruchs 1. Dabei fesselt der Schieber eine Feder unter Belassen von Federweg unter Vorspannung, wobei seine Haltenase beim Eindrücken unter Federkraft steht und jetzt Federkraft überträgt. Ein Löseelement greift am Schieber an. Feder und Schieber bilden dadurch ein geschlossenes System, das beim Betätigen am Löseelement nur die Überwindung von Reibungskräften erfordert. Dadurch ist es möglich, mehrere Geräte durch gekoppelte Löseelemente von Hand zu bedienen, und es ist einfacher möglich, Verrastungen in der Offenstellung des Schiebers zu realisieren. Ein derartiger Komfort wird üblicherweise als Einhandbedienung zusammengefasst.

Beim Lösen eines derartigen Gerätes von einer Tragschiene kommt man wegen der erheblich verminderten Betätigungskräfte auch ohne Werkzeug aus, so dass eine bloße Handhabe, also eine Handangriffsfläche, am Löseelement genügt.

Um das Löseelement in einer Ebene anordnen zu können, die gegen die Arbeitsebene des Schiebers geneigt ist, insbesondere um 90°, ist es günstig, wenn der Schieber ein Ansatzteil mit Gelenkteil aufweist, wobei das Ansatzteil zur Verbindung mit einer Handhabe ausgeführt ist. Es genügt dann ein im wesentlichen geradliniges Löseelement mit einer Handhabe, das zusammen mit dem Ansatzteil eine Art Kniegelenk bildet.

Bei einer Weiterbildung nach Anspruch 3 bleibt ein Klemmenanschlussraum frei, was den Einsatz bei schmalen Schutzschaltgeräten bei stabiler Ausführung des Löseelementes ermöglicht. Bei einer vorteilhaften Ausführung nach Anspruch 4 weist das Löseelement zwei Stege auf, die an ihrem einen Ende der Lösehebel zwei Stege aufweist, die an ihrem einen Ende mit einer Handhabe verbunden sind und an ihrem anderen Ende mit einer Aufnahme für ein Ansatzteil des Schiebers.

Der Schieber selbst bildet einen dreiseitigen Rahmen, der eine Feder aufnimmt, die mit einem Riegel verbunden ist, der eine vierte Seite des Rahmens bildet. Diese vierte Seite ist hinsichtlich der Gestaltung der übrigen Rahmenseiten in den Rahmen hinein bewegbar, aber im Rahmen durch Anschläge gegen eine Bewegung aus dem Rahmen heraus begrenzt. Vorteilhaft kann dabei die Feder als Formteil des dreiseitigen Rahmens ausgebildet sein, wobei der Riegel die vierte Rahmenseite bildet und Anschläge in Form von hakenartigen Anformungen der benachbarten Rahmenseiten hintergreift.

Eine besonders einfache Ausführung erzielt man dadurch, dass am Riegel das Ansatzteil unter Bildung eines Filmangussscharniers angeformt ist. Geeignete Kunststoffe, die einerseits eine ausreichende Festigkeit und Härte aufweisen und andererseits bei entsprechender Gestaltung federnd sind, bzw. biegbar, sind in zahlreichen Varianten auf dem Markt.

Die Fertigung wird weiter vereinfacht, wenn die Feder mit dem dreiseitigen Rahmen verbunden ist und insbesondere als ein einheitliches Formteil hergestellt ist. Der Rahmen bildet zugleich die Nase, die darauf abgestimmt ist, den Tragschienenrand zu hintergreifen.

Eine Ausgestaltung nach Anspruch 5 ermöglicht das Verbinden von Geräten an ihren Handhaben am Löseelement.

Ein im Löseelement freigelassener Klemmenanschlussraum kann besonders vorteilhaft und bedienungssicher mit einer Anschlussklemme besetzt sein, die Anschlussebenen bildet. In der unteren Anschlussebene der Anschlussklemme können Stromschienen angeschlossen werden und in der oberen Leiter. Hierbei bleiben die Leiter für Montage und Demontage gut zugänglich. Ein Gerät mit einer derartigen Anschlussklemme kann jederzeit aus einem Verbund angereihter Geräte auch leicht wieder herausgelöst werden, wenn für die untere Anschlussebene eine so große Anschlussöffnung aufgemacht werden kann, dass das Gerät in gekippter Position von der Tragschiene auch bei angeschlossener Stromschiene abgenommen werden kann. Das Herauslösen des Gerätes wird durch das zuvor beschriebene Löseelement, insbesondere zusammen mit dem Schieber, mit der beschriebenen besonderen Feder erleichtert.

Nachfolgend werden Ausführungsbeispiele der Erfindung anhand einer Zeichnung näher erläutert:
In FIG 1 ist ein Schieber mit Ansatzteil als ein Formteil so wiedergegeben, wie der Schieber als Spritzgussteil zunächst erhalten wird.
In FIG 2 ist nach Art einer Explosionsdarstellung ein Schieber mit Ansatzteil zusammen mit einem Löseelement mit Handhabe, an seinem freien Ende, in Seitenansicht dargestellt.
In FIG 3 ist das Löseelement gemäß Ausführungsbeispiel nach FIG 2 in Ansicht von vorn veranschaulicht.
In FIG 4 ist das Gerät bei schematischer Wiedergabe des von einem Löseelement beaufschlagten Schiebers, gerade noch in Offenstellung, dargestellt. Ein Gerät nach FIG 4 weist beispielsweise einen Schieber 1 nach FIG 6 und ein Löse- oder Betätigungselement 4 in der Ansicht nach FIG 2 auf. Der Schieber 1 nach FIG 1 fesselt eine Feder 2 unter Vorspannung und unter Belassen von Federweg, wobei seine Haltenase 3 beim Eindrücken unter Federkraft steht, wenn das Löseelement 4 am Schieber angreift und Widerlager gibt.
In FIG 5 ist der Schieber gemäß Ausführungsbeispiel nach FIG 2 wieder in Aufsicht, jedoch bei vergrößerter Wiedergabe, dargestellt.
In FIG 6 ist der Schieber nach FIG 5 verwendungsfähig montiert. Der Riegel als vierte Seite ist hierbei in den dreiseitigen Rahmen hineingeschoben und durch Anschläge gegen eine Bewegung aus dem Rahmen heraus begrenzt.
In FIG 7 ist der Schieber nach FIG 6 in einem Zustand dargestellt, wie er sich ergibt, wenn die Nase des Schiebers beim Aufschnappen des Geräts durch den Schienenrand zurückgedrückt wird.
In FIG 8 ist der Schieber nach FIG 6 in einem Zustand wiedergegeben, wie er sich ergibt, wenn die Nase des Schiebers einen Schienenrand hintergriffen hat, um das Gerät, in dem der Schieber angeordnet ist, auf einer Tragschiene zu halten.
In FIG 9 ist eine Weiterbildung zur Kopplung benachbarter Geräte dargestellt.

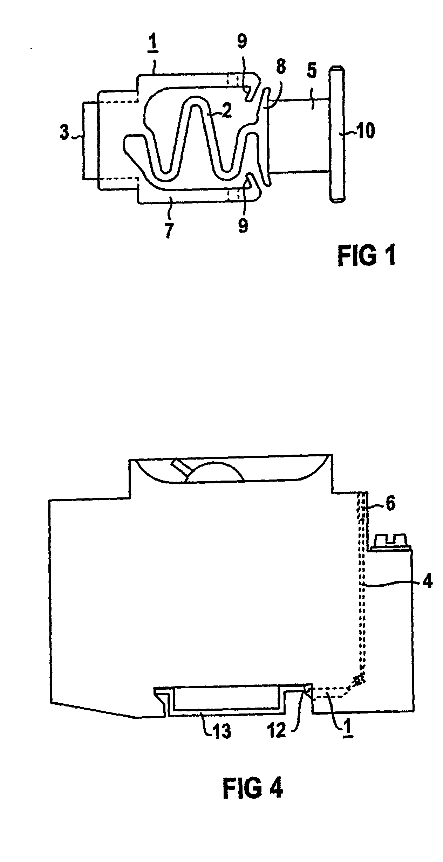

Der Schieber 1 im Ausführungsbeispiel nach FIG 1, 5 bzw. 6 bildet einen dreiseitigen Rahmen 7, der eine Feder 2 aufnimmt. Die Feder 2 ist mit einem Riegel 8 verbunden, der eine vierte Seite des Rahmens 7 bildet. Der Riegel 8 ist hinsichtlich der Gestaltung der übrigen Rahmenseiten in den Rahmen hinein bewegbar, aber im Rahmen durch Anschläge 9 gegen eine Bewegung aus dem Rahmen 7 heraus begrenzt.

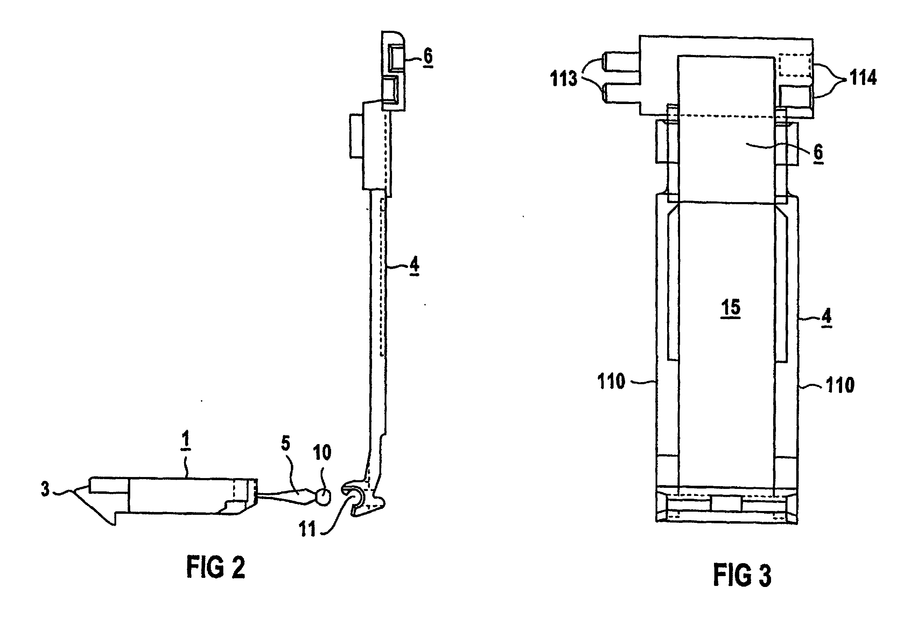

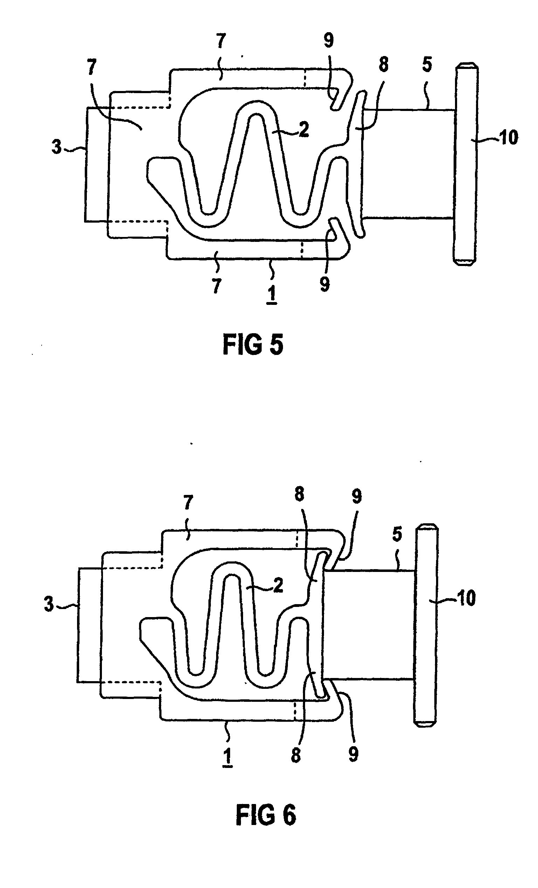

Vorteilhafterweise kann die Feder 2 als Formteil des dreiseitigen Rahmens 7 ausgebildet sein und mit dem Riegel 8 verbunden sein. Die Anschläge 9 können hakenartige Anformungen der benachbarten Rahmenseiten sein, die den Riegel 8 beim Einsetzen in den dreiseitigen Rahmen 7 hintergreifen. Insbesondere kann die Feder 2 mit dem dreiseitigen Rahmen 7 verbunden oder mit diesem einteilig ausgeführt sein. Im Ausführungsbeispiel ist am Riegel das Ansatzteil 5 des Schiebers unter Bildung eines Filmangussscharniers angeformt. Das Ansetzteil 5 bildet im Ausführungsbeispiel eine Achse 10, die in einer Aufnahme 11 des Löseelements 4 nach FIG 2 eingesetzt werden kann. In der Darstellung nach FIG 2 ist die Verrastungsstellung für den Schieber 1 veranschaulicht. Zum Lösen des Schiebers wird das Löseelement 4 an der Handhabe 6 hochgezogen, wobei das Ansatzteil 5 des Schiebers schräg gestellt wird und der Schieber 1 zurückgezogen wird (FIG 4).

Der Rahmen 7 bildet eine Haltenase 3, die darauf abgestimmt ist, den Tragschienenrand 12 einer Tragschiene 13 nach FIG 4 zu hintergreifen.

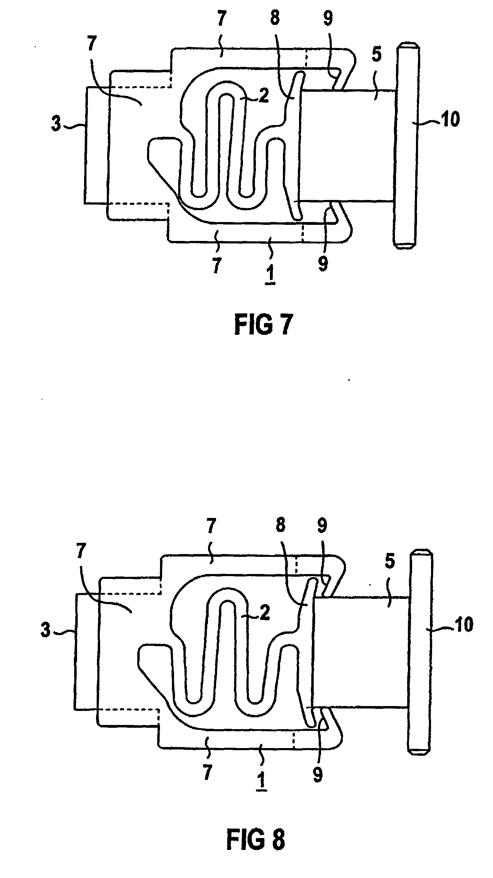

Beim Aufschnappen eines Geräts auf der Tragschiene gelangt der Schieber 1 zu den Positionen nach FIG 6, 7 und 8. Wenn das Gerät nicht auf einer Tragschiene aufgesetzt ist, vollführt der Schieber 1 alle Bewegungen in einem Zustand nach FIG 6, bei dem die Feder über den Schieber hinaus keine Kraft abgibt. Beim Übergleiten der Haltenase 3 des Schiebers 1 über den Tragschienenrand ergibt sich eine Position nach FIG 7 und im aufgesetzten Zustand auf der Tragschiene eine Position etwa nach FIG 8. Das Gerät wird dann gerade unter Federkraft auf der Tragschiene gehalten. Alle Betätigungen des Schiebers, wenn das Gerät nicht auf einer Tragschiene aufgesetzt ist, vollziehen sich ohne Federkraft, da die Feder 2 in dem Rahmen 7 gefesselt ist.

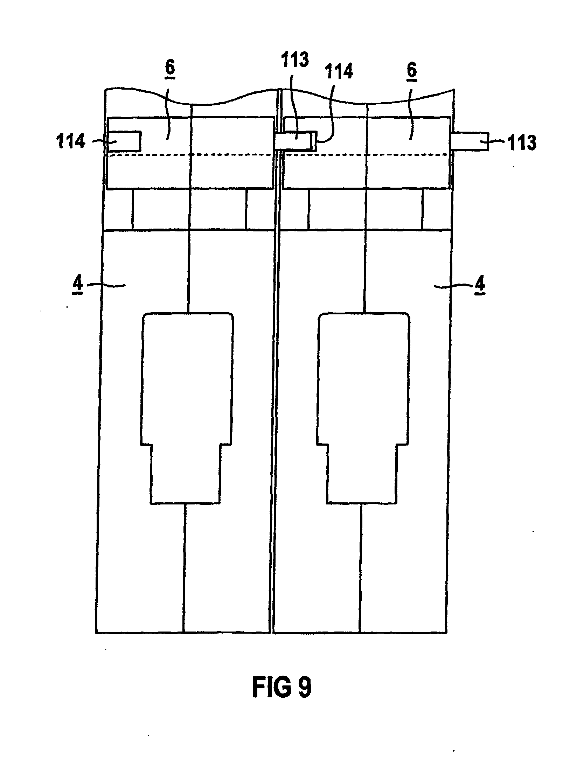

Wenn die Handhabe 6 nach FIG 9 Verbindungselemente 113, 114 nach Art eines Zapfens 113 und eines Loches 114 aufweist, können benachbarte Löseelemente 4 gekoppelt werden, so dass sie von Hand gemeinsam bedient werden können.

Das Löseelement 4 liegt in einer Ebene, die im Ausführungsbeispiel nach FIG 2 auf der Arbeitsebene, in der der Schieber 1 arbeitet, in etwa senkrecht steht. Je nach Zweckmäßigkeit und Gegebenheit können auch andere Winkel eingeschlossen werden. Das Löseelement 4 ist stegartig ausgebildet und lässt einen Klemmenanschlussraum 15 nach FIG 3 frei. Vorteilhafterweise weist das Löseelement 4 zwei Stege 110 auf, die an ihrem einen Ende mit ihrer Handhabe 6 verbunden sind und an ihrem anderen Ende mit einem Gegengelenkteil, z.B. als Aufnahme 11 für eine Achse an dem Ansatzteil 5 des Schiebers. Im Klemmenanschlussraum 15 lässt sich eine Anschlussklemme unterbringen, vorteilhaft eine sogenannte Fahrstuhlklemme.

## Patentansprüche

1. Auf eine Tragschiene (13) aufschnappbares Gerät mit einem federbelasteten Schieber (1) mit einer Haltenase (3) zum Hintergreifen eines Tragschienenrandes (12), wobei der Schieber (1) unter Eingriff eines von der Geräteoberseite her bedienbaren Löseelementes (4) steht, das in einer einen Winkel zur Arbeitsebene des Schiebers (1) einschließenden Ebene liegt,
**dadurch gekennzeichnet,**
- **dass** der Schieber (1) einen dreiseitigen und an der vierten Seite offenen Rahmen (7) bildet, wobei der Rahmen (7) eine Feder (2) aufnimmt, die einerseits mit dem Rahmen (7) und andererseits mit einem an der offenen Seite vorgesehenen Riegel (8) verbunden ist, und wobei der Riegel (8) relativ zum Rahmen (7) bewegbar und durch rahmenseitige Anschläge (9) gegen eine Bewegung aus dem Rahmen (7) heraus begrenzt ist,
- **dass** der Rahmen (7) die Haltenase (3) bildet, und
- **dass** am der Haltenase (3) gegenüberliegenden und in den Rahmen (7) hinein bewegbaren Riegel (8) ein mit dem Löseelement (4) in Eingriff stehendes Ansatzteil (5) angeformt ist.

2. Gerät nach Anspruch 1,
**dadurch gekennzeichnet,**
**dass** das Ansatzteil (5) ein in eine Aufnahme (11) des Löseelementes (4) eingesetztes Gelenkteil (10) aufweist.

3. Gerät nach Anspruch 1 oder 2,
**dadurch gekennzeichnet,**
**dass** das Löseelement (4) stegartig ausgebildet ist und einen Klemmenanschlussraum (15) freilässt.

4. Gerät nach Anspruch 3,
**dadurch gekennzeichnet,**
**dass** das Löseelement (4) zwei Stege (110) aufweist, die an deren einem Ende mit einer Handhabe (6) und an deren anderem Ende mit der Aufnahme (11) verbunden sind.

5. Gerät nach Anspruch 4,
**dadurch gekennzeichnet,**
**dass** die Handhabe (6) Verbindungselemente (113, 114) nach dem Prinzip von Nut und Feder oder Loch (114) und Zapfen (113) aufweist, durch die sie mit der Handhabe (6) benachbarter Geräte verbindbar ist.

6. Gerät nach einem der Ansprüche 1 bis 5,
**dadurch gekennzeichnet,**
**dass** die Feder (2) als Formteil des dreiseitigen Rahmens (7) ausgebildet ist.

7. Gerät nach einem der Ansprüche 1 bis 6,
**dadurch gekennzeichnet,**
**dass** die vom Riegel (8) hintergriffenen Anschläge (9) hakenartige Anformungen gegenüberliegender Rahmenseiten sind.

8. Gerät nach einem der Ansprüche 1 bis 7,
**dadurch gekennzeichnet,**
**dass** das Ansatzteil (5) unter Bildung eines Filmangussscharniers am Riegel (8) angeformt ist.

9. Gerät nach einem der Ansprüche 1 bis 8,
**dadurch gekennzeichnet,**
**dass** beim Lösen des Schiebers (1) von der Tragschiene (13) infolge einer Betätigen des Löseelementes (4) das mit diesem in Eingriff stehende Ansatzteil (5) schräg gestellt ist.

## Claims

1. Device having a snap-on fitting for a supporting rail (13) with a springloaded slider (1) with a retaining projection (3) for engaging behind a supporting rail edge (12), whereby the slider (1) is engaged by a release element (4) which can be operated from the upper side of the device and which is located in a plane forming an angle with the working plane of the slider (1),
**characterised in that**
- the slider (1) forms a three-sided frame (7) which is open on the fourth side, whereby the frame (7) accommodates a spring (2) which is connected on the one side to the frame (7) and on the other side to a catch (8) provided on the open side, and whereby the catch (8) is capable of moving relative to the frame (7) and a movement out of the frame (7) is restricted by means of stops (9) in the frame,
- the frame (7) forms the retaining projection (3), and
- an extension piece (5) which engages with the release element (4) is moulded on the catch (8) which is located opposite the retaining projection (3) and is capable of moving into the frame (7).

2. Device according to Claim 1,
**characterised in that**
the extension piece (5) has an articulation piece (10) which engages in a receiving facility (11) in the release element (4).

3. Device according to Claim 1 or 2,
**characterised in that**
the release element (4) is designed with a flange-type construction and leaves a terminal connection space (15) free.

4. Device according to Claim 3,
**characterised in that**
the release element (4) has two flanges (110) which at the one end are connected to a handle (6) and at the other end are connected to a receiving facility (11).

5. Device according to Claim 4,
**characterised in that**
the handle (6) has connector elements (113, 114) according to the principle of tongue and groove or hole (114) and pin (113), by means of which they can be connected to adjacent devices using the handle (6).

6. Device according to Claim 4,
**characterised in that**
the spring (2) is designed as a moulded part of the three-sided frame (7).

7. Device according to one of the Claims 1 to 6,
**characterised in that**
the stops (9) behind which the catch (8) engages are hook-like moulded sections of opposite frame sides.

8. Device according to one of the Claims 1 to 7,
**characterised in that**
the extension piece (5) is moulded on the catch (8) and a film sprue hinge is formed.

9. Device according to one of the Claims 1 to 8,
**characterised in that**
when the slider (1) is released from the supporting rail (13) as a result of actuating the release element (4) the extension piece (5) engaged with this is set at an oblique angle.

## Revendications

1. Appareil pouvant être encliqueté sur un rail ou un profilé de support (13), comprenant un coulisseau (1) qui est chargé par ressort et comporte un talon de retenue (3) destiné à venir s'engager sous un bord (12) du rail de support, le coulisseau (1) étant en prise avec un élément de déverrouillage (4) qui peut être manoeuvré à partir du côté supérieur de l'appareil, et qui se situe dans un plan faisant un angle avec le plan de travail du coulisseau (1),
**caractérisé**
- **en ce que** le coulisseau (1) forme un cadre (7) à trois côtés, qui est ouvert sur le quatrième côté, le cadre (7) recevant un ressort (2) qui est relié d'une part au cadre (7) et d'autre part à un verrou (8) prévu sur ledit côté ouvert, et le verrou (8) étant mobile relativement par rapport au cadre (7) et est limité, par des butées (9) du cadre, à l'encontre d'un mouvement de sortie hors du cadre (7),
- **en ce que** le cadre (7) forme le talon de retenue (3), et
- **en ce que** sur le verrou (8) opposé au talon de retenue (3) et pouvant être amené à l'intérieur du cadre (7), est formée une pièce d'appendice (5) en prise avec l'élément de déverrouillage (4).

2. Appareil selon la revendication 1, **caractérisé en ce que** la pièce d'appendice (5) présente une partie d'articulation (10) insérée dans un logement de réception (11) de l'élément de déverrouillage (4).

3. Appareil selon la revendication 1 ou 2, **caractérisé en ce que** l'élément de déverrouillage (4) est réalisé sous forme de branche et laisse libre un espace de bornes de connexion (15).

4. Appareil selon la revendication 3, **caractérisé en ce que** l'élément de déverrouillage (4) présente deux branches (110) qui, à l'une de leurs extrémités sont reliées à un élément de manoeuvre (6), et à l'autre extrémité au logement de réception (11).

5. Appareil selon la revendication 4, **caractérisé en ce que** l'élément de manoeuvre (6) présente des éléments de liaison (113, 114) selon le principe rainure et clavette ou trou (114) et tenon (113), par l'intermédiaire desquels il peut être relié à l'élément de manoeuvre (6) d'appareils voisins.

6. Appareil selon l'une des revendications 1 à 5, **caractérisé en ce que** le ressort (2) est réalisé en tant que pièce de forme moulée du cadre (7) à trois côtés.

7. Appareil selon l'une des revendications 1 à 6, **caractérisé en ce que** les butées (9) derrière lesquelles vient s'engager le verrou (8), sont des parties de côtés de cadre opposés, moulées en saillie et en forme de crochet.

8. Appareil selon l'une des revendications 1 à 7, **caractérisé en ce que** la pièce d'appendice (5) est formée par moulage sur le verrou (8) en y étant raccordée par une chamière à film venue de moulage.

9. Appareil selon l'une des revendications 1 à 8, **caractérisé en ce que** lors du déverrouillage et démontage du coulisseau (1) du rail de support (13) suite à un actionnement de l'élément de déverrouillage (4), la pièce d'appendice (5) en prise avec celui-ci est en position oblique.
